# EUROPÄISCHE PATENTSCHRIFT

(11) **EP 3 011 236 B1**
(45) Veröffentlichungstag und Bekanntmachung des Hinweises auf die Patenterteilung: **12.02.2020**
(21) Anmeldenummer: 14731611.1
(22) Anmeldetag: 17.06.2014
(51) Int. Cl.: F24S 40/80, F24S 10/40

(54) **ABSORBERROHR**
ABSORBER PIPE
TUBE ABSORBEUR

(30) Priorität: 18.06.2013 DE 102013211381
(43) Veröffentlichungstag der Anmeldung: 27.04.2016
(73) Patentinhaber: Schott Solar AG, 55122 Mainz (DE)
(72) Erfinder: KUCKELKORN, Thomas, 07743 Jena (DE); BENZ, Nikolaus, 55131 Mainz (DE)
(74) Vertreter: Mehler Achler
(86) Internationale Anmeldenummer: PCT/EP2014/062718
(87) Internationale Veröffentlichungsnummer: WO 2014/202606

(56) Entgegenhaltungen:
- EP-A1- 2 597 395
- EP-A2- 2 581 684
- WO-A2-2014/026891
- DE-B3-102005 022 183
- DE-B4- 10 231 467
- DE-U1-202013 001 309
- JP-A- S58 168 846

## Beschreibung

Die Erfindung betrifft ein Absorberrohr gemäß dem Oberbegriff des Anspruchs 1.

Die DE 10 231 467 B4 beschreibt ein solches Absorberrohr, das insbesondere für Parabolrinnenkollektoren in solartechnischen Kraftwerken zur Anwendung kommt. Das Absorberrohr weist ein zentrales Metallrohr und ein das zentrale Metallrohr umgebendes Hüllrohr aus Glas auf. Das Glashüllrohr ist an beiden Enden mit einem Glas-Metall-Übergangselement versehen, an dem jeweils eine Dehnungsausgleichseinrichtung oder ein Anschlusselement angreift. Die Dehnungsausgleichseinrichtung ist mindestens teilweise im Ringraum zwischen dem Metallrohr und dem Glasübergangselement angeordnet.

Das Anschlusselement kann sich in dem Ringraum zwischen der Dehnungsausgleichseinrichtung und dem Metallrohr erstrecken, wodurch bei einer konischen Ausgestaltung des Anschlusselementes flach auftreffende Strahlung sowie die Abstrahlung des Metallrohres auf das Metallrohr zurückreflektiert wird.

Das Anschlusselement kann sich auch im Ringraum zwischen Dehnungsausgleichseinrichtung und Glashüllrohr erstrecken und ist in diesem Fall mit dem Glas-Metall-Übergangselement verbunden. Das Anschlusselement besitzt ein Befestigungselement in Form einer Ringscheibe, mit der das Anschlusselement an der Dehnungsausgleichseinrichtung befestigt ist, die einen Faltenbalg umfassen kann. Eine Ringscheibe ist ein flacher, runder Gegenstand.

Aus der DE 60 223 711 T2 ist ein Absorberrohr bekannt, bei dem das Glas-Metall-Übergangselement und die Dehnungsausgleichseinrichtung in Gestalt eines Faltenbalgs in axialer Richtung hintereinander angeordnet sind. An der Außenseite sind ein erstes Schildelement, das den Faltenbalg abschirmt, und ein zweites Schildelement vorgesehen, das das Glas-Metall-Übergangselement vor einfallender Strahlung abschirmt. Außerdem ist im Ringraum zwischen Glashüllrohr und Metallrohr im Bereich des Glas-Metall-Übergangselementes ein interner Strahlungsschild angeordnet. Der interne Strahlungsschild ist mit Haltearmen im Faltenbalg eingehängt.

Ein Nachteil dieser Anordnung mit Faltenbalg und mit Glas-Metall-Übergangselement ist die relativ große Baulänge, was zu einer Verminderung der freien Apertur und damit des Wirkungsgrades führt.

Durch eines der beiden äußeren Schildelemente wird das Glas-Metall-Übergangselement zunächst vor direkter Bestrahlung von außen geschützt. Das innere, einen L-förmigen Querschnitt aufweisende Strahlungsschild weist im Bereich des Glas-Metall-Übergangselementes lediglich Stützarme auf, so dass flach einfallende und reflektierte Strahlung vom Metallrohr im Bereich zwischen den Stützarmen auf das Glas-Metall-Übergangselement auftreffen kann. Lediglich ein Teil dieser Strahlung wird von dem inneren Strahlungsschild abgefangen.

Diese Konstruktion hat den weiteren Nachteil, dass sie selbst Strahlung absorbiert und sich dadurch erwärmt. Das innere Strahlungsschild ist thermisch nur unzureichend über die Stützarme an den Faltenbalg angekoppelt, so dass der Anteil der Strahlung, der vom Ringbauteil absorbiert wird, größtenteils wieder durch Strahlung abgegeben werden muss. Ein erheblicher Anteil der Wärmeabstrahlung trifft wiederum das Glas-Metall-Übergangselement. Hierdurch erfährt das Glas-Metall-Übergangselement einen sekundären Wärmeeintrag durch Abstrahlung vom erhitzten Strahlungsschild.

Sowohl DE 10 231 467 B4 als auch DE 60 223 711 T2 offenbaren einen außen liegenden Schutz des Glas-Metall-Überganges und der Dehnungsausgleichseinrichtung. Dieser außen liegende Schutz wird heute in der Regel nach der Installation des Receivers im Kraftwerk montiert. Dazu werden Abschirmbleche nach dem Zusammenschweißen der Receiver im Feld montiert.

Ein Nachteil hierbei ist, dass der Glas-Metall-Übergang während des Transports und bei der Installation ungeschützt ist und dadurch leicht beschädigt werden kann. Während des Montageprozesses können Kratzer im Hüllrohr entstehen, wobei Kratzer in der Nähe des Glas-Metall-Übergangselementes besonders kritisch sind und zur Schwächung des Absorberrohres und zu späterem Glasbruch im Betrieb führen können.

Aufgabe der Erfindung ist es, ausgehend von dem Stand der Technik gemäß der DE 10 231 467 B4 die Lebensdauer des Absorberrohres weiter zu erhöhen.

Diese Aufgabe wird mit den Merkmalen des Anspruchs 1 gelöst.

Es ist vorgesehen, dass das Absorberrohr ein zentrales Metallrohr und ein das Metallrohr umgebendes Glashüllrohr aufweist, wobei an mindestens einem Ende des Glashüllrohrs ein Glas-Metall-Übergangselement angeordnet ist. Dieses Glas-Metall-Übergangselement ist über mindestens eine Dehnungsausgleichseinrichtung mit dem Metallrohr verbunden. Zudem sind das Glas-Metall-Übergangselement und das Metallrohr über die Dehnungsausgleichseinrichtung relativ zueinander in Längsrichtung verschiebbar angeordnet. Dabei ist die Dehnungsausgleichseinrichtung mindestens teilweise in einem Ringraum zwischen dem Metallrohr und dem Glas-Metall-Übergangselement angeordnet. Ein inneres Ende der Dehnungsausgleichseinrichtung ist an einem Anschlusselement befestigt, das mit dem Glas-Metall-Übergangselement verbunden ist und ein äußeres Ende der Dehnungsausgleichseinrichtung ist am Metallrohr befestigt. Zwischen dem Glas-Metall-Übergangselement und dem Anschlusselement ist ein Ringraumabschnitt des Ringraumes ausgebildet und das Anschlusselement und die Dehnungsausgleichseinrichtung weisen zusammen in axialer Draufsicht eine kreisringförmige Stirnfläche auf.

Das Anschlusselement des Absorberrohres weist eine Ringscheibe auf, an der die Dehnungsausgleichseinrichtung befestigt ist.

Es ist vorgesehen, dass an mindestens einem Ende des Absorberrohres im Ringraum mindestens eine Abschirmeinrichtung angeordnet ist, die einen ersten ringscheibenförmigen Abschnitt aufweist, wobei der ringscheibenförmige Abschnitt in axialer Richtung beabstandet vor der Stirnfläche angeordnet ist.

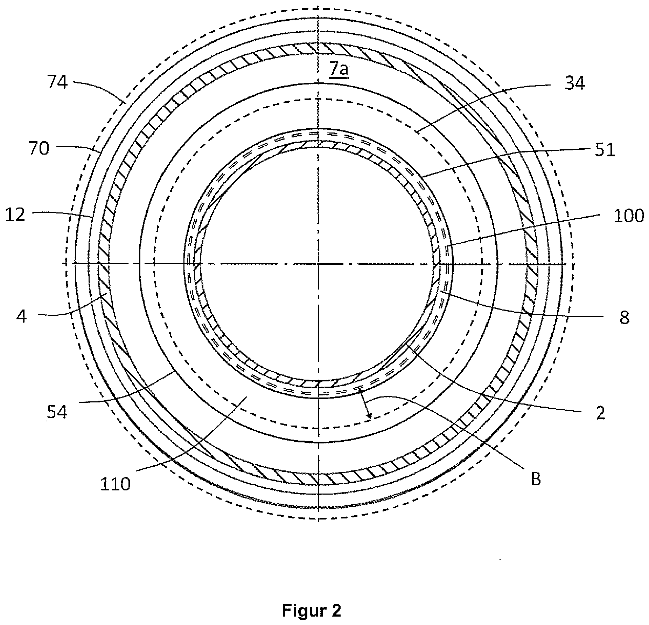

Die Stirnfläche und die Verbindungsstelle von Anschlusselement und Dehnungsausgleichseinrichtung werden im Zusammenhang mit der Fig. 2 noch näher erläutert.

Der erste ringscheibenförmige Abschnitt hat den Vorteil, dass er nicht nur den Verbindungsbereich der Dehnungsausgleichseinrichtung und des Anschlusselementes, sondern auch das Glas-Metall-Übergangselement wenigstens teilweise vor Sonnenstrahlung und/oder vor vom Metallrohr reflektierter Strahlung und oder vom Metallrohr emittierter IR-Strahlung schützt.

Es hat sich herausgestellt, dass das Glas-Metall-Übergangselement und die Dehnungsausgleichseinrichtung bezüglich der Standzeit des Absorberrohres kritische Komponenten darstellen.

Zwar wird die vom Metallrohr reflektierte Strahlung oder abgestrahlte Strahlung zum Teil durch die Ringscheibe des Anschlusselements von der Dehnungsausgleichseinrichtung und dem Glas-Metall-Übergangselement wenigstens teilweise ferngehalten, jedoch können weiterhin Schädigungen, insbesondere in dem Bereich, wo die Dehnungsausgleichseinrichtung mit der Ringscheibe verbunden ist, auftreten. Somit kann es dort unter Umständen zu Undichtigkeiten an den Kontaktstellen kommen, so dass dann im Ringraum das erforderliche Vakuum verloren geht oder das Gas, insbesondere die Edelgasfüllung, im Ringraum durch Lufteinbruch verunreinigt wird. Mittels der Abschirmeinrichtung wird diese Schädigung vermieden. Es hat sich gezeigt, dass mit dem ersten ringscheibenförmigen Abschnitt der Abschirmeinrichtung im Ringraum des Absorberrohres und der Ringscheibe an dem Anschlusselement die Standzeit des Absorberrohres wirksam erhöht werden kann.

Über die Größe der Fläche des ersten ringscheibenförmigen Abschnitts kann die Menge der abzuschirmenden Strahlung gezielt eingestellt werden. Vorzugsweise deckt der erste ringscheibenförmige Abschnitt mindestens 50% der Stirnfläche ab.

Die Strahlungsenergie, die auf den ersten ringscheibenförmigen Abschnitt auftrifft, führt zu einer Erwärmung des ersten ringscheibenförmigen Abschnitts und wird durch Wärmeleitung in der Fläche der Abschirmeinrichtung verteilt, wodurch das Temperaturniveau abgesenkt wird. Durch die vorzugsweise glatte Oberfläche wird der größte Teil der Strahlung direkt nach außen, beziehungsweise zum Metallrohr, reflektiert, während im Stand der Technik ein größerer Teil der Strahlung in den Balgschlaufen absorbiert wird. Der absorbierte Teil der Strahlung wird durch Wärmeleitung in der gesamten Abschirmeinrichtung verteilt, wodurch ein gleichmäßiges Temperaturniveau über die gesamte Abschirmeinrichtung erreicht wird. Vorzugsweise ist die Abschirmeinrichtung an ein metallisches Bauteil des Absorberrohres - mit Ausnahme des Metallrohres - angeschlossen, so dass die Wärme auch abgeleitet werden kann. Dies wird im Einzelnen noch erläutert.

Die Ringscheibe des Anschlusselements hat den Vorteil, dass eine deutliche Stabilitätssteigerung des Anschlusselements und somit der gesamten Anordnung aus Dehnungsausgleichseinrichtung und Anschlusselement erzielt wird. Weiterhin ermöglicht die Ringscheibe einen zusätzlichen Schutz der Dehnungsausgleichseinrichtung vor Sonnenstrahlung oder/und vor von dem Metallrohr reflektierter beziehungsweise emittierter Strahlung. Insbesondere kann diese Ringscheibe als Montagefläche für zusätzliche Funktionselemente wie beispielsweise einen Schutzgasbehälter oder eine Indikator-Getter-Feder genutzt werden.

Da das Material der Dehnungsausgleichseinrichtung in der Regel im Betrieb des Absorberrohres wegen der erforderlichen Beweglichkeit stärker belastet wird als das Anschlusselement, das bezüglich der Temperaturbelastung und der Strahlungsbelastung auch aus einem resistenteren Material gefertigt werden kann, ist es von Vorteil, wenn die Ringscheibe des Anschlusselements möglichst groß ausgeführt ist. Es wird dadurch entsprechend Material der Dehnungsausgleichseinrichtung eingespart, was die Standzeit der Gesamtanordnung aus Anschlusselement und Dehnungsausgleichseinrichtung zusätzlich verbessert.

Es ist von Vorteil, wenn die Ringscheibe des Anschlusselementes mindestens 50%, bevorzugt mindestens 75%, besonders bevorzugt mindestens 90% und insbesondere bis zu 100% der kreisförmigen Stirnfläche einnimmt.

Je größer die Ringscheibe ausgeführt ist, desto kleiner ist der Radius R3 des Innenrands der Ringscheibe, so dass der Verbindungsbereich von Dehnungsausgleichseinrichtung und Ringscheibe näher an das Metallrohr heranrückt. Damit wird die Dehnungsausgleichseinrichtung weniger Sonnenstrahlung und/oder weniger vom Metallrohr reflektierter Strahlung ausgesetzt. Dies hat den weiteren Vorteil, dass der erste ringscheibenförmige Abschnitt der Abschirmeinrichtung den Verbindungsbereich nicht oder nicht vollständig abdecken muss.

Der erste ringscheibenförmige Abschnitt der Abschirmeinrichtung deckt vorzugsweise 50% bis 80%, besonders bevorzugt 80% bis 95% von der kreisringförmigen Stirnfläche ab. Über die Größe der Fläche des ersten ringförmigen Abschnitts in Relation zu der Fläche der Ringscheibe des Anschlusselements kann der Anteil der abzuschirmenden Strahlung und der auf das Anschlusselement auftreffenden Strahlung und somit die Temperaturverteilung am betreffenden Ende des Absorberrohres gezielt eingestellt werden.

Ein weiterer Vorteil einer möglichst großen Ringscheibe des Anschlusselements besteht darin, dass die Wärmeenergie noch besser über das Anschlusselement verteilt und abgeleitet werden kann.

Vorzugsweise weist die Ringscheibe des Anschlusselements einen Innenrand mit einem Innenradius R3 auf, an dem die Dehnungsausgleichseinrichtung befestigt ist.

In einer bevorzugten Ausführungsform weist der erste ringscheibenförmige Abschnitt der Abschirmeinrichtung einen Innenradius R1 auf, wobei der Innenradius R1 größer/gleich dem Innenradius R3 ist.

Diese Ausgestaltung bietet insbesondere während des Montageprozesses einen Vorteil. Je größer der Radius R1 ist, desto leichter ist es während des Zusammenfügens von Abschirmeinrichtung, Anschlusselement und Dehnungsausgleichseinrichtung zu vermeiden, dass die Abschirmeinrichtung das Metallrohr berührt und störende Kratzer in dessen Oberfläche verursacht.

Je größer die Ringscheibe ausgeführt ist, desto kleiner ist der Radius R3 des Innenrands der Ringscheibe, so dass der Verbindungsbereich von Dehnungsausgleichseinrichtung und Ringscheibe näher an das Metallrohr heranrückt und damit zusätzlich die empfindliche Dehnungsausgleichseinrichtung von Sonnenstrahlung und/oder vom Metallrohr reflektierter Strahlung abschirmt.

In einer weiteren bevorzugten Ausführungsform weist die Dehnungsausgleichseinrichtung einen Innenradius R2 auf, wobei R2 größer/gleich R3 ist.

Diese Ausgestaltungsform bietet den Vorteil, dass bei radialen Relativbewegungen zwischen Metallrohr und Glasrohr, wie sie insbesondere bei Erschütterungen während des Transportes auftreten können, Berührungen zwischen der empfindlicheren Dehnungsausgleichseinrichtung und dem Metallrohr weitgehend vermieden werden.

In einer weiteren bevorzugten Ausführungsform weist die Ringscheibe des Anschlusselements eine erste Sicke auf, an der die Dehnungsausgleichseinrichtung angeordnet ist. Diese Sicke ist vorzugsweise umlaufend um den ganzen Umfang der Ringscheibe angeordnet und ist axial in Richtung des Dehnungsausgleichselements gewölbt. Folglich befindet sich die Öffnung der Sicke auf der von dem Dehnungsausgleichselement abgewandten Seite. Dabei kann der Boden der Sicke im Schnitt kreisförmig oder aber auch oval, beziehungsweise länglich ausgebildet sein
Der Vorteil dieser Ausgestaltungsform liegt in einer deutlichen Stabilitäts- und Steifigkeitssteigerung der Ringscheibe, wodurch die Langzeitstabilität des Absorberrohres gesteigert werden kann. Zudem ist die Schweißstelle zwischen Ringscheibe und Dehnungsausgleichselement während des Herstellprozesses leichter zugänglich.

Der erste ringscheibenförmige Abschnitt kann senkrecht zur Mittelachse M angeordnet sein. Es ist jedoch besonders bevorzugt, dass der erste ringscheibenförmige Abschnitt bezüglich einer Senkrechten S auf der Mittelachse M des Absorberrohres um einen Winkel α ≥ 0 geneigt angeordnet ist. Der erste ringscheibenförmige Abschnitt ist vorzugsweise derart geneigt angeordnet, dass ein radial außenliegender Rand den Teil der Abschirmeinrichtung darstellt, der am weitesten in den Ringraum hineinragt. Der axial außenliegende Rand der Abschirmeinrichtung weist weiter in den Ringraum als ein Innenrand des ersten ringscheibenförmigen Abschnitts der Abschirmeinrichtung.

Diese Ausgestaltung hat den Vorteil, dass ein großer Teil der schräg einfallenden Strahlen nicht auf die Abschirmvorrichtung trifft, wo sie teilweise zur nicht nutzbaren Erwärmung derselben führt, sondern direkt auf das Metallrohr auftritt und dort in nutzbare Wärme umgewandelt wird. Die Neigung des ersten ringscheibenförmigen Abschnitts vergrößert die wirksame Fläche des Absorberrohres im Vergleich zu einem nicht geneigten Stirnflächenabschnitt.

Vorzugsweise liegt der Winkel α im Bereich von 0° - 30°. Dieser Bereich ist bevorzugt, weil im Jahresmittel bei üblichen Aufstellorten für solarthermische Parabolrinnenkraftwerke die Sonneneinstrahlung besonders häufig in einem Winkel von ca. 20° auftritt.

Bei einem Winkel > 30° würde der radial außen liegende Rand der Abschirmeinrichtung axial zur Rohrmitte hin verschoben und damit einen Teil des Metallrohres überdecken, wodurch die effektive Länge des Metallrohres insbesondere bei nahezu senkrechter Einstrahlung vermindert würde.

Die Abschirmeinrichtung erstreckt sich mindestens teilweise in den Ringraumabschnitt zwischen dem Glas-Metall-Übergangselement und dem Anschlusselement. Die Wärme des ersten ringscheibenförmigen Abschnitts wird dadurch besser verteilt und in den kühleren Bereich des Ringraumabschnittes geleitet.

Es ist daher bevorzugt, dass der erste ringscheibenförmige Abschnitt an seinem radial außenliegenden Rand in einen ersten rohrförmigen Abschnitt übergeht, der sich in den Ringraumabschnitt erstreckt. Der rohrförmige Abschnitt ist vorzugsweise zylindrisch oder konisch ausgebildet.

Die konische Ausbildung hat den Vorteil, dass ein guter Kontakt mit dem rohrförmigen Abschnitt des Anschlusselements zwecks Wärmeleitung hergestellt werden kann, ohne dass hochgenaue Fertigungstoleranzen für das Anschlusselement und den rohrförmigen Abschnitt der Abschirmeinrichtung erforderlich sind.

Die Abschirmeinrichtung weist vorzugsweise einen zweiten ringscheibenförmigen Abschnitt auf. Dieser zweite ringförmige Abschnitt schließt sich an den ersten rohrförmigen Abschnitt an und trägt ebenfalls zur besseren Wärmeverteilung bei.

Die Abschirmeinrichtung weist vorzugsweise einen zweiten rohrförmigen Abschnitt auf, der sich an den zweiten ringscheibenförmigen Abschnitt anschließt.

Der zweite ringscheibenförmige Abschnitt liegt vorzugsweise an dem Glas-Metall-Übergangselement oder an einem ringscheibenförmigen Abschnitt des Anschlusselementes an. Dies hat den Vorteil, dass die Abschirmeinrichtung mittels des zweiten ringscheibenförmigen Abschnitts fixiert werden kann. Der zweite rohrförmige Abschnitt der Abschirmvorrichtung kann ebenfalls an dem rohrförmigen Abschnitt des Anschlusselementes anliegen. Auch kann über diesen zweiten ringscheibenförmigen Abschnitt und/oder den zweiten rohrförmigen Abschnitt Wärme an das Glas-Metall-Übergangselement oder an das Anschlusselement abgeleitet und somit an die Umgebung des Absorberrohres abgegeben werden.

Vorzugsweise weist die Abschirmeinrichtung einen dritten ringscheibenförmigen Abschnitt auf.

Der dritte ringscheibenförmige Abschnitt schließt sich vorzugsweise an den zweiten rohrförmigen Abschnitt an und liegt vorzugsweise ebenfalls an dem Glas-Metall-Übergangselement an. Dies bietet den Vorteil, dass die Abschirmeinrichtung auch mittels des dritten ringscheibenförmigen Abschnitts fixiert werden kann. Auch über den dritten ringscheibenförmigen Abschnitt kann Wärme an das Glas-Metall-Übergangselement abgeleitet werden. Der dritte ringscheibenförmige Abschnitt erstreckt sich im zwischen der Dehnungsausgleichseinrichtung und dem Glas-Metall-Übergangselement gebildeten Ringraum radial nach außen.

Vorzugsweise weist das Glas-Metall-Übergangselement eine Ringstufe auf, an der sich der dritte ringscheibenförmige Abschnitt der Abschirmeinrichtung abstützt.

Der zweite ringscheibenförmige Abschnitt erstreckt sich im zwischen der Dehnungsausgleichseinrichtung und dem Glas-Metall-Übergangselement gebildeten Ringraum radial nach außen und kann sich gemäß einer Ausführungsform an dem Glas-Metall-Übergangselement abstützen. Dadurch wird zwischen dem zweiten ringscheibenförmigen Abschnitt und einem außen angeordneten Ringscheibenabschnitt des Anschlusselementes eine Ringkammer abgetrennt, die zur Aufnahme von Gettermaterial dienen kann.

Eine andere Ausführungsform sieht vor, dass der zweite oder der dritte ringscheibenförmige Abschnitt der Abschirmeinrichtung an dem Ringscheibenabschnitt des Anschlusselementes anliegt. Diese Ausführungsform hat den Vorteil, dass die Wärme der Abschirmeinrichtung über den Ringscheibenabschnitt des Anschlusselementes nach außen abgeführt werden kann. Je nach Wahl der Ausführungsform ist der zweite rohrförmige Abschnitt der Abschirmeinrichtung länger oder kürzer ausgebildet.

Die Ringstufe des Glas-Metall-Übergangselementes führt auch zu einer Durchmessererweiterung des Glas-Metall-Übergangselementes in Richtung Rohrende. Der Ringraum zwischen dem zweiten ringscheibenförmigen Abschnitt und den Ringscheibenabschnitt des Anschlusselementes wird dadurch vergrößert, so dass mehr Raum zur Aufnahme von Gettermaterial zur Verfügung steht. Außerdem verhindert die Ringstufe eine axiale Verschiebung des Abschirmelementes weg von der Stirnfläche der Dehnungsausgleichseinrichtung.

Vorzugsweise ist im Ringraumabschnitt zwischen dem Glas-Metall-Übergangselement und dem Anschlusselement ein Getter angeordnet. Ein Getter besteht aus einem Material, das in der Lage ist, Restgase in einem weitgehend evakuierten Raum chemisch oder physikalisch zu binden. Damit wird das zur Wärmeisolierung des Receivers erforderliche Vakuum im Ringraum zwischen dem Metallrohr und dem Glas-hüllrohr über einen langen Betriebszeitraum aufrecht erhalten.

Die Anbringung des Getters in dem Ringraum hat den Vorteil, dass eine zusätzliche Halteeinrichtung für die Aufnahme des Getters entfällt. Der Getter wird durch den Ringscheibenabschnitt des Anschlusselementes einerseits und durch den ringscheibenförmigen Abschnitt des Abschirmelementes gehalten. Vorzugsweise ist der erste rohrförmige Abschnitt der Abschirmeinrichtung im Abstand zum Anschlusselement angeordnet. Insbesondere ist der erste rohrförmige Abschnitt im Abstand zum rohrförmigen Abschnitt des Anschlusselementes angeordnet.

Dadurch wird der Ringraumabschnitt zwischen dem Glas-Metall-Übergangselement und der Abschirmeinrichtung verringert. Die Fläche des ersten ringscheibenförmigen Abschnittes kann dadurch vergrößert werden, so dass weniger Strahlung von unten an das Glas-Metall-Übergangselement gelangen kann.

Vorzugsweise kontaktiert der erste rohrförmige Abschnitt das Anschlusselement, vorzugsweise den rohrförmigen Abschnitt des Anschlusselementes.

Dieser formschlüssige Kontakt hat den Vorteil, dass die Wärme der Abschirmeinrichtung noch besser abgeleitet werden kann.

Vorzugsweise weisen das Anschlusselement wenigstens eine vierte Sicke und der erste rohrförmige Abschnitt der Abschirmeinrichtung eine dritte Sicke auf, die derart eingerichtet sind, dass sie ineinander greifen können. Dabei sind die Sicken vorzugsweise abschnittsweise in Umfangsrichtung des Anschlusselements und des ersten rohrförmigen Abschnitts angeordnet. Vorzugsweise rasten die Sicken beim Ineinanderschieben des Anschlusselements und des ersten rohrförmigen Abschnitts ineinander. Vorzugsweise sind jeweils drei vierte Sicken am Anschlusselement und drei dritte Sicken am rohrförmigen Abschnitt angeordnet.

Die Ausbildung von Sicken hat den Vorteil einer Steifigkeitserhöhung der jeweiligen Elemente. Weiterhin verhindern diese Sicken ebenfalls ein Verschieben in axialer Richtung und ein Verdrehen der Abschirmeinrichtung um die Mittelachse des Absorberrohres und sind erforderlich, damit die Abschirmeinrichtung auf dem Anschlusselement fixiert ist.

Vorzugsweise weist die Abschirmeinrichtung Öffnungen auf. Diese Öffnungen, die Löcher oder Schlitze sein können, sind vorzugsweise im zweiten ringscheibenförmigen Abschnitt und/oder im ersten rohrförmigen Abschnitt der Abschirmeinrichtung angeordnet. Damit in den Ringraum eindiffundierte Gase, insbesondere Wasserstoff, vom Getter gebunden werden können, ist es von Vorteil, dass durch diese Öffnungen der Gasaustausch stattfinden kann.

Die Abschirmeinrichtung ist vorzugsweise ein ringförmiges Element. Das Element ist vorzugsweise als geschlossener Ring ausgebildet.

Vorzugsweise ist an der Außenseite des Glashüllrohrs eine Außenschutzkappe vorgesehen, die mindestens das Glas-Metall-Übergangselement abdeckt.

Durch die fest montierte Außenschutzkappe wird das Glas-Metall-Übergangselement bereits während der letzten Schritte der Herstellung des Absorberrohres, beim Transport sowie beim Montageprozess im Kraftwerk vor mechanischer Beschädigung geschützt. Weiterhin schützt die Außenschutzkappe das Glasmetallübergangselement vor Strahlung, die vom Primärspiegel von außen kommt. Zudem wird Wärme vom Glas-Metall-Übergangselement abgeleitet, nach außen geführt und durch Konvektion an die umgebende Luft abgegeben.

Vorzugsweise ist an der Außenschutzkappe eine Bördelung vorgesehen. Diese Bördelung ist vorzugsweise an dem freien Ende der Außenschutzkappe angebracht und radial von dem Absorberrohr weggerichtet.

Diese Bördelung bietet den Vorteil einer Steifigkeitserhöhung der Außenschutzkappe und führt somit zu einer verstärkten Widerstandsfähigkeit der Schutzkappe gegen äußere mechanische Einwirkungen.

Vorzugsweise ist an wenigstens einem Anschlusselement eine Halterung befestigt, an der ein Schutzgasbehälter oder eine Indikatorgetter-Feder angeordnet ist.

Vorzugsweise ist an der Ringscheibe der Dehnungsausgleichseinrichtung eine Halterung befestigt, die derart eingerichtet ist, dass sie für die Anordnung von wenigstens einem Schutzgasbehälter oder/und einer Indikatorgetter-Feder geeignet ist.

Die Anbringung der Halterung an dem Anschlusselement hat den Vorteil, dass wenigstens ein Schutzgasbehälter in dem inneren Ringraum an einem stabilen Bauteil des Absorberrohres angeordnet werden kann. Bei Bedarf kann ein Schutzgas in den Ringraum eingeleitet werden. Dies ist besonders vorteilhaft, wenn sich nach langer Betriebsdauer Wasserstoff im inneren Ringraum angesammelt hat, und die Aufnahmekapazität des Getters bereits erschöpft ist. Durch das Einleiten des Schutzgases entsteht im inneren Ringraum ein Gasgemisch, dessen wärmeisolierende Wirkung zwar nicht mehr so gut wie die des ursprünglichen Vakuums, jedoch wesentlich besser als diejenige des Wasserstoffes ist. Somit können Wärmeverluste über einen weiteren Betriebszeitraum deutlich reduziert werden.

Vorzugsweise weist der erste ringscheibenförmige Abschnitt einen Abschnitt oder eine Öffnung für den Durchtritt der Halterung und/oder der Halterung und des Schutzgasbehälters oder der Indikatorgetter-Feder auf.

Diese Öffnung hat den Vorteil, dass sowohl die Halterung oder der Schutzgasbehälter beziehungsweise die Indikatorgetter-Feder oder aber auch die Halterung und der Schutzgasbehälter beziehungsweise die Indikatorgetter-Feder wenigstens teilweise direkt in dem inneren Ringraum angeordnet sind. Durch diese Anordnung kann der Schutzgasbehälter oder/und die Indikatorgetter-Feder platzsparend in dem Absorberrohr untergebracht werden. Zudem muss für den Gaseinlass in den inneren Ringraum durch den Schutzgasbehälter keine gesonderte Leitungsvorrichtung vorhanden sein.

Beispielhafte Ausführungsformen werden nachfolgend anhand der Zeichnungen näher erläutert.

Es zeigen:
- Figur 1:: einen Längsschnitt durch ein Absorberrohr,
- Figur 2:: einen Querschnitt durch das Absorberrohr längs der Linie A-A aus Figur 1,
- Figur 3:: eine vergrößerte Ausschnittsdarstellung der Einzelheit X aus Figur 1,
- Figur 4:: eine Ausschnittsdarstellung einer weiteren Ausführungsform der Einzelheit X aus Figur 1,
- Figur 5:: eine perspektivische Explosionsdarstellung einzelner Teile der Figur 1,
- Figur 6:: eine Schnittdarstellung der Figur 1, wobei lediglich das Anschlusselement und das Abschirmelement dargestellt sind,
- Figur 7:: einen Längsschnitt durch ein Absorberrohr mit integriertem Schutzgasbehälter.

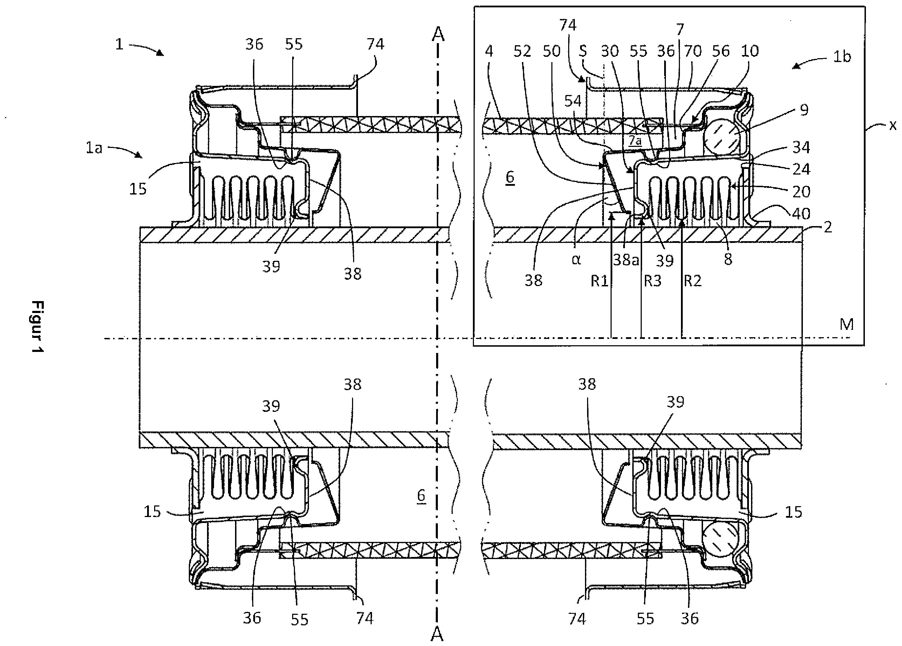

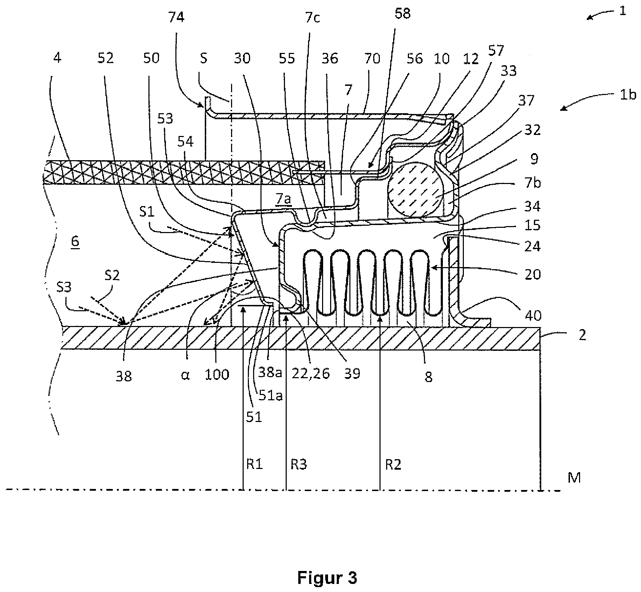

In der Figur 1 ist ein Absorberrohr 1 mit Mittelachse M dargestellt. Das Absorberrohr 1 weist ein Metallrohr 2, durch das eine Wärmetauscherflüssigkeit strömt, und ein Glashüllrohr 4 auf. Das Glashüllrohr 4 ist dabei koaxial zu dem Metallrohr 4 angeordnet und über ein Glas-Metall-Übergangselement 10, ein Anschlusselement 30 sowie eine Dehnungsausgleichseinrichtung 20 in Gestalt eines Faltenbalgs und ein Befestigungselement 40 mit dem Metallrohr 2 verbunden. Hierbei ist die Dehnungsausgleichseinrichtung 20 mit ihrem äußeren Ende 24 an dem Befestigungselement 40 befestigt. Bei dieser Anordnung wird die Dehnungsausgleichseinrichtung 20 wenigstens teilweise von dem Anschlusselement 30 eingerahmt, wobei die Dehnungsausgleichseinrichtung 20 mit dem Anschlusselement 30 einen nach außen offenen äußeren Ringraum 15 begrenzt (siehe Figur 3). Zwischen dem Glashüllrohr 4 und dem Metallrohr 2 wird ein innerer Ringraum 6 gebildet, der evakuiert oder mit einem Schutz- beziehungsweise Edelgas gefüllt ist.

An den Enden 1a und 1b des Absorberrohres 1 geht dieser Ringraum 6 in die beiden Ringraumabschnitte 7 und 8 über. Der Ringraumabschnitt 7 wird im Wesentlichen zwischen dem Glas-Metall-Übergangselement 10 und dem Anschlusselement 30 ausgebildet und unterteilt sich in die Unterabschnitte 7a, b und c. Der Unterabschnitt 7a wird von dem Glashüllrohr 4 und dem Glas-Metall-Übergangselement 10 einerseits und einer Abschirmeinrichtung 50 andererseits begrenzt. Die Unterabschnitte 7b und 7c befinden sich zwischen dem Anschlusselement 30 und der Abschirmeinrichtung 50, wobei in dem Ringraumabschnitt 7b ein Getter 9 angeordnet ist. Der Ringraumabschnitt 8 befindet sich zwischen dem Metallrohr 2 und der Dehnungsausgleichseinrichtung 20.

Das Metallrohr 2 weist üblicherweise eine Beschichtung auf, die jedoch nicht in der Figur 1 dargestellt ist. Die Beschichtung ist dazu eingerichtet, die durch das Glashüllrohr 4 einfallende Sonnenstrahlung möglichst optimal zu absorbieren. Die Figur 1 zeigt an beiden Enden 1a und 1b des Absorberrohres 1 eine Dehnungsausgleichseinrichtung 20. Es ist auch möglich, das Absorberrohr 1 lediglich an einem Ende 1a oder 1b mit einer solchen Dehnungsausgleichseinrichtung 20 zu versehen.

In der Figur 1 ist eine erste Ausführungsform der Abschirmeinrichtung 50 und eines Anschlusselements 30 dargestellt, die im Detail im Zusammenhang mit der Figur 3 beschrieben wird.

In der Figur 2 ist ein Schnitt durch das Absorberrohr 1 längs der Linie A-A in Figur 1 dargestellt. Die axiale Draufsicht in Richtung Rohrende 1b auf das Anschlusselement 30 und die Dehnungsausgleichseinrichtung 20 definieren die Stirnfläche 110, die eine Breite B aufweist. Das Anschlusselement 30 aus Figur 1 und die Dehnungsausgleichseinrichtung 20 sind an der Verbindungsstelle 100 miteinander verbunden.

In der Figur 3 ist eine vergrößerte Darstellung der Einzelheit X aus der Figur 1 dargestellt. Der Faltenbalg der Dehnungsausgleichseinrichtung 20 ist am äußeren Ende 24 am Befestigungselement 40 befestigt, welches seinerseits am Metallrohr 2 befestigt, insbesondere angeschweißt, ist. Am inneren Ende 22 weist der Faltenbalg einen Verbindungsabschnitt 26 auf, an dem das Anschlusselement 30 mit seinem Befestigungsabschnitt 39 befestigt ist.

Das Anschlusselement 30 weist dabei eine Ringscheibe 38 auf, die in den Befestigungsabschnitt 39 mündet und senkrecht zu dem Metallrohr 2 angeordnet ist. Der Befestigungsabschnitt 39 ist dabei radial in Richtung der Dehnungsausgleichseinrichtung 20 eingewölbt und die Verbindung zwischen dem Befestigungsabschnitt 39 und der Dehnungsausgleichseinrichtung 20 findet parallel zu dem Metallrohr 2 statt. Der Befestigungsabschnitt 39 stellt vorzugsweise eine erste Sicke dar. Die Dehnungsausgleichseinrichtung 20 weist einen Innenradius R2 und der Innenrand 38a des Anschlusselements 30 einen Innenradius R3 zu der Mittelachse M des Metallrohrs 2 auf. Zwischen der Dehnungsausgleichseinrichtung 20 und dem Metallrohr 2 wird somit der Ringraumabschnitt 8 gebildet.

Das Anschlusselement 30 weist einen konisch ausgebildeten rohrförmigen Abschnitt 34 auf, der die Ringraumabschnitte 7b und 7c begrenzt und an dem Ende 1b (in der Figur 1 auch das Ende 1a) in einen Ringscheibenabschnitt 32 übergeht. Der Ringscheibenabschnitt 32 besitzt eine nach innen weisende zweite Sicke 37 und einen sich radial nach außen erstreckenden Befestigungsabschnitt 33. An dem Befestigungsabschnitt 33 ist das Glas-Metall-Übergangselement 10 angeordnet sowie die Außenschutzkappe 70. Die Außenschutzkappe 70 wird vorzugsweise zusammen mit dem Glas-Metall-Übergangselement 10 und dem Ringscheibenabschnitt 32 bei der Herstellung des Absorberrohres 1 verschweißt oder mittels einer sonstigen form-, kraft- oder stoffschlüssigen Verbindung fest verbunden. Die Außenschutzkappe 70 erstrecht sich über das gesamte Glas-Metall-Übergangselement. Insofern dient die Außenschutzkappe 70 beim anschließenden Transport als zusätzlicher Schutz des Glas-Metall-Übergangsbereiches, nämlich der Verbindungsstelle zwischen dem Glashüllrohr 4 und dem Glas-Metall-Übergangselement 10. Für eine zusätzliche Versteifung ist an dem freien Ende der Außenschutzkappe 70 eine radial nach außen weisende Bördelung 74 angebracht.

Für einen zusätzlichen Schutz der Dehnungsausgleichseinrichtung 20 ist eine Abschirmeinrichtung 50 angeordnet. Das Glas-Metall-Übergangselement 10 weist eine Ringstufe 12 auf, an der sich die Abschirmeinrichtung 50 abstützt. Die Abschirmeinrichtung 50 weist einen ersten ringscheibenförmigen Abschnitt 52 auf, dessen Innenrand 51 einen Innenradius R1 zu der Mittelachse M des Metallrohrs 2 aufweist und der beabstandet vor der Stirnfläche 110 angeordnet ist.

Der Innenrand 51 weist einen abgewinkelten Abschnitt 51a auf, der in Richtung Ringscheibe 38 des Anschlusselements 30 weist und der den Abstand zum Anschlusselement 30 zumindest teilweise überbrückt, wodurch das Eindringen von am Metallrohr 2 reflektierten Strahlen verhindert wird. Dieser abgewinkelte Abschnitt 51a endet in radialer Richtung vor dem Verbindungsbereich 100, der somit von der Abschirmeinrichtung 50 nicht abgedeckt wird. Der erste ringscheibenförmige Abschnitt 52 ist so weit in axialer Richtung vor der Stirnfläche 110 angeordnet, dass der Verbindungsbereich 100 trotzdem weitgehend vor Strahlung geschützt wird.

In den Figuren 1 und 3 ist deutlich zu erkennen, dass der Innenradius R1 des ringscheibenförmigen Abschnitts 52 der Abschirmeinrichtung 50 größer/gleich dem Innenradius R2 der Dehnungsausgleichseinrichtung 20 und größer/gleich dem Innenradius R3 des Anschlusselements 30 ist. Der ringscheibenförmige Abschnitt 52 ist dabei unter einem Winkel α ∼ 10° gegenüber der Senkrechten S auf der Mittelachse M geneigt angeordnet. Die Neigung des Abschnitts 52 ist derart gewählt, dass der radial außenliegende Rand 53 der Abschirmeinrichtung 50 am weitesten in den Ringraum 6 hinein ragt. Der geneigt ausgebildete erste ringförmige Abschnitt 52 reflektiert schräg einfallende Strahlung S1 zurück auf das Metallrohr 2. Schräg auf das Metallrohr 2 auftreffende Strahlung S2 und S3 wird auf den ersten ringscheibenförmigen Abschnitt 52 reflektiert, der die Strahlung vom Faltenbalg 20 sowie vom Glas-Metall-Übergangselement 10 fernhält. Der erste ringscheibenförmige Abschnitt 52 bildet somit einen konischen Abschnitt der Abschirmeinrichtung 50. Die Abschirmeinrichtung 50 kontaktiert den Faltenbalg nicht.

Außerdem weist die Abschirmeinrichtung 50 einen ersten rohrförmigen Abschnitt 54 auf. Über eine dritte Sicke 55 in diesem rohrförmigen Abschnitt 54 rastet die Abschirmeinrichtung 50 in eine vierte Sicke 36 des Anschlusselements 30 ein, wodurch eine Versteifung der Abschirmeinrichtung 50 und des Anschlusselements 30 innerhalb des Absorberrohres 1 erzielt wird. Durch einen Abstand zwischen dem rohrförmigen Abschnitt 54 der Abschirmungseinrichtung 50 und des rohrförmigen Abschnitts 34 des Anschlusselements wird ein innerer Ringraumabschnitt 7c gebildet, in dem sich die Sicke 36 und 55 befinden. Die rohrförmigen Abschnitte 34 und 54 können mit oder ohne Sicken 36, 55 auch mindestens teilweise aufeinanderliegen.

Der rohrförmige Abschnitt 34 des Anschlusselements 30 ist ebenso wie der erste rohrförmige Abschnitt 54 konisch ausgebildet. In der hier dargestellten Ausführungsform liegt der erste rohrförmige Abschnitt 54, bis auf die Verbindungsstelle der dritten Sicke 55 und vierten Sicke 36, nicht auf dem konischen Abschnitt 34 auf. Die Wärme des ersten rohrförmigen Abschnitts 54 wird über das Anschlusselement 30 an die Umgebungsluft abgegeben, wobei nur ein geringer Wärmekontakt über die Flächen der dritten und vierten Sicke 55 und 36 erfolgt. Ein größerer Wärmeanteil fließt über das Glas-Metall-Übergangselement 10 ab. Der Abschnitt 54 erstreckt sich nur teilweise in den Ringraumabschnitt 7, wobei sich in etwa der Mitte der Längserstreckung des Ringraumabschnitts 7 der zweite ringscheibenförmige Abschnitt 56 und ein zweiter rohrförmiger Abschnitt 58 anschließt. An den zweiten rohrförmigen Abschnitt 58 schließt sich ein dritter ringscheibenförmiger Abschnitt 57 an, der an einer Ringschulter 12 des Glas-Metall-Übergangselementes 10 anliegt. Der Ringraumabschnitt 7 wird mittels der Abschnitte 54, 56 und 58 in den Ringraumabschnitt 7a, 7c und die Ringkammer 7b unterteilt.

Das Glas-Metall-Übergangselement 10 ist an einem Ende an dem Glashüllrohr 4 befestigt und erstreckt sich in axialer Richtung auswärts, wo am anderen Ende das Glas-Metall-Übergangselement 10 mit dem Anschlusselement 30 verbunden ist. Die Ringschulter 12 führt zu einer Durchmessererweiterung, wodurch die Ringkammer 7 erweitert wird, so dass ausreichend Platz für die Unterbringung eines Getters 9 geschaffen wird (siehe auch Figur 1).

Zwischen dem zweiten ringförmigen Abschnitt 56 und dem Ringscheibenabschnitt 32 ist somit in der Ringkammer 7b ein Getter 9 angeordnet. Der Getter 9 weist vorzugsweise, wie in der Figur 1 dargestellt, einen runden Querschnitt auf und ist mittels der einwärts gerichteten zweiten Sicke 37 und einem dritten ringförmigen Abschnitt 57 der Abschirmeinrichtung 50 gegen Verschieben in axialer Richtung gehalten.

Der Verbindungsbereich 100 wäre ohne Abschirmeinrichtung 50 sowohl der einfallenden, als auch der vom Metallrohr 2 reflektierten Strahlung ausgesetzt und würde dadurch eine hohe thermische Belastung erfahren. Durch dadurch verursachte Undichtigkeiten im Verbindungsbereich 100 würde sich der Unterdruck im Ringraum 6 verschlechtern. Durch die Abschirmeinrichtung 50 und insbesondere durch den ersten ringscheibenförmigen Abschnitt 52 wird die Lebensdauer des Absorberrohres 1 deutlich erhöht.

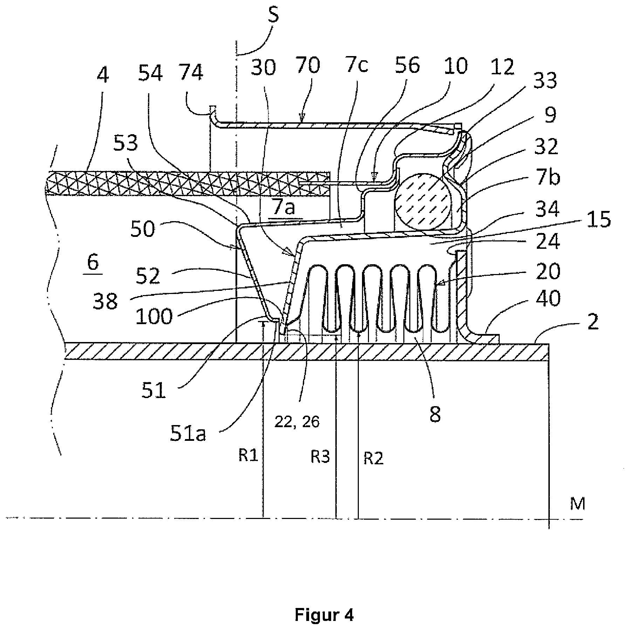

In der Figur 4 ist eine weitere Ausführungsform des Absorberrohres 1 dargestellt. Im Gegensatz zu den Figuren 1 und 3 weisen weder das Anschlusselement 30 noch die Abschirmeinrichtung 50 eine dritte Sicke 55 beziehungsweise eine vierte Sicke 36 auf. Der erste rohrförmige Abschnitt 54 ist in einem Abstand zu dem rohrförmigen Abschnitt 34 angeordnet, wodurch ein größerer innerer Ringraumabschnitt 7c gebildet wird. Zudem ist der Verbindungsbereich 100 im Gegensatz zu Figur 1 nicht parallel zu dem Metallrohr 2 angeordnet, sondern lediglich als Verlängerung der Ringscheibe 38 ausgeführt. Der Verbindungsabschnitt 26 der Dehnungsausgleichseinrichtung 20 liegt hinter der Ringscheibe 38 und somit in einem vor Strahlung geschützten Bereich. Die Ringscheibe 38 ist im Unterschied zur ersten Ausführungsform nicht senkrecht zur Mittelachse M sondern geneigt dazu angeordnet, wobei das innere Ende 22 am weitesten in den Ringraum 6 vorsteht. Die gesamte Ringscheibe 38 ist somit konisch ausgebildet.

Das Anschlusselement 30 weist zudem eine Ringscheibe 38 ohne einen radial in Richtung der Dehnungsausgleichseinrichtung 20 eingewölbten Befestigungsabschnitt, folglich ohne erste Sicke 39, auf. Auch in dieser Ausführungsform ist der Innenradius R2 der Dehnungsausgleichseinrichtung 20 zu der Mittelachse M des Metallrohrs 2 kleiner als der Innenradius R1 des ersten ringscheibenförmigen Abschnitts 52 von der Mittelachse M des Metallrohrs 2. Auch bei dieser Ausführungsform weist der erste ringscheibenförmige Abschnitt einen abgewinkelten Innenrand 51a auf. Im Gegensatz zu der Figur 1 und Figur 3 ist hier jedoch der Innenradius R3, der Ringscheibe 38 des Anschlusselements 30 kleiner als R2.

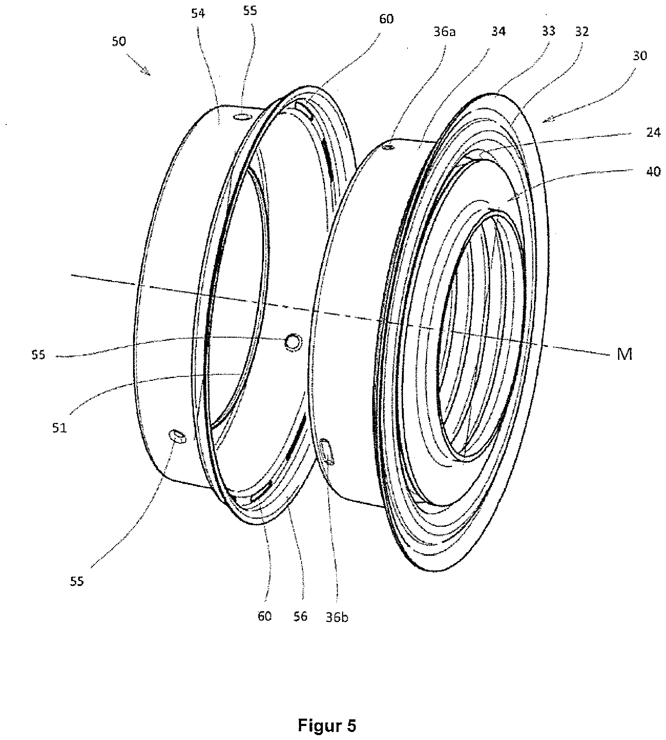

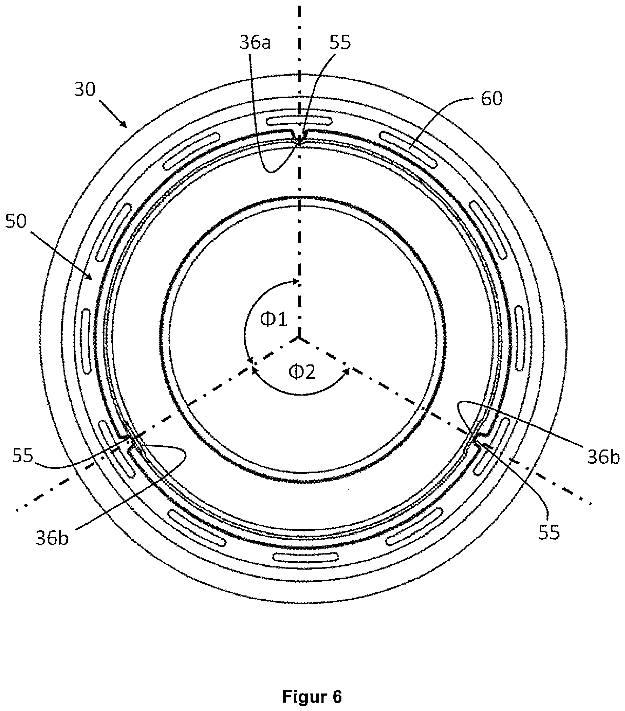

In der Figur 5 ist eine perspektivische Explosionsdarstellung einzelner Teile der Figur 1 abgebildet, in der das Anschlusselement 30 und die Abschirmeinrichtung 50 getrennt voneinander dargestellt sind. Hier ist deutlich die Anordnung der drei dritten Sicken 55 in der Abschirmeinrichtung 50 zu erkennen, die umfänglich jeweils in einem Winkel von 120° um die Mittelachse M der Abschirmeinrichtung 50 beziehungsweise des Anschlusselements 30 zueinander angeordnet sind. Dies wird in der Figur 6 noch deutlicher sichtbar. Dabei fällt die Mittelachse der Abschirmeinrichtung 50 und des Anschlusselements 30 bei dem Zusammenführen mit dem Metallrohr 2 mit dessen Mittelachse M zusammen, wodurch sich hier auf ein Bezugszeichen beschränkt wurde.

Das Anschlusselement 30 weist jedoch zwei verschiedene vierte Sicken 36a und 36b auf. Die vierte Sicke 36b ist wie die vierte Sicke 36a im rohrförmigen Abschnitt 34 des Anschlusselements 30 angeordnet, in welche eine der dritten Sicken 55 der Abschirmeinrichtung 50 einrastet. Die vierte Sicke 36b weist jedoch eine ovale beziehungsweise in Umfangsrichtung des Anschlusselements längliche Grundfläche auf, wohingegen die vierte Sicke 36a einen kreisförmigen Boden aufweist. Vorzugsweise enthält der rohrförmige Abschnitt 34 eine vierte Sicke 36a mit kreisförmigem Querschnitt und zwei vierte Sicken 36b mit ovalem beziehungsweise länglichem Querschnitt, die ebenfalls in einem Winkel von 120° um die Mittelachse M angeordnet sind. In der Figur 3 ist jedoch aufgrund der perspektivischen Darstellung jeweils nur eine vierte Sicke 36a und 36b dargestellt. Die vierte Sicke 36a verhindert sowohl Verschiebungen der Abschirmeinrichtung 50 in axialer Richtung, als auch Verdrehungen um die Mittelachse M des Absorberrohres 1, die in der Figur 3 mit der Mittelachse M identisch ist. Die vierten Sicken 36b verhindern ebenfalls eine Verschiebung in axialer Richtung und sind erforderlich, damit die Abschirmeinrichtung 50 auf dem Anschlusselement 30 fixiert ist. Durch die ovale Grundfläche lassen sie zusätzlich höhere Toleranzen in der Verteilung der dritten und vierten Sicken 55 und 36 um die Mittelachse M des Metallrohrs 2 zu, so dass der Winkelabstand der vierten Sicken 36a und 36b sowie der dritten Sicken 55 nicht mehr exakt 120° betragen muss. Dadurch ist die Fertigung der Abschirmeinrichtung 50 einfacher und preiswerter als in einer vergleichbaren Konstruktion, in der die vierten Sicken 36a und 36b in dem Anschlusselement 30 alle eine kreisförmige Grundfläche aufweisen.

Zusätzlich sind in dem Abschnitt 56 Öffnungen 60 in Form von Löchern eingebracht, damit Restgase im evakuierten Ringraum 6 zum Getter 9 gelangen können. Diese Löcher können auch in Form von radialen Schlitzen angeordnet sein.

Die Figur 6 zeigt eine Schnittdarstellung der Figur 1 senkrecht zu der Mittelachse M des Metallrohrs 2, wobei der Übersichtlichkeit halber lediglich das Anschlusselement 30 und das Abschirmelement 50 dargestellt sind. In dieser Figur ist eindeutig die Winkelverteilung Φ₁ und Φ₂ der vierten Sicken 36a und 36b zu erkennen. Winkel Φ₁ kennzeichnet den Winkel um die Mittelachse M der vierten Sicke 36a und der vierten Sicke 36b. Winkel Φ₂ kennzeichnet den Winkel um die Mittelachse M zwischen zwei vierten Sicken 36b. Winkel Φ₁ und Winkel Φ₂ betragen jeweils vorzugsweise annähernd 120°. Da die dritten Sicken 55 wenigstens teilweise deckungsgleich mit den vierten Sicken 36a und 36b liegen, beträgt der Winkel zwischen den Sicken ebenfalls Winkel Φ₁ oder Winkel Φ₂. Weiterhin ist hier die unterschiedliche Ausformung der Böden der Sicken 36 und 37 erkennbar. Der Kontaktpunkt zwischen den vierten und dritten Sicken 36b und 55 kann sich in einem gewissen Bereich über den ovalen Boden der vierten Sicken 36b verschieben, so dass die Winkel Φ₁ und Φ₂ nicht exakt 120° betragen müssen, so dass die Lage der dritten Sicken 55 eine gewisse Toleranz aufweisen kann.

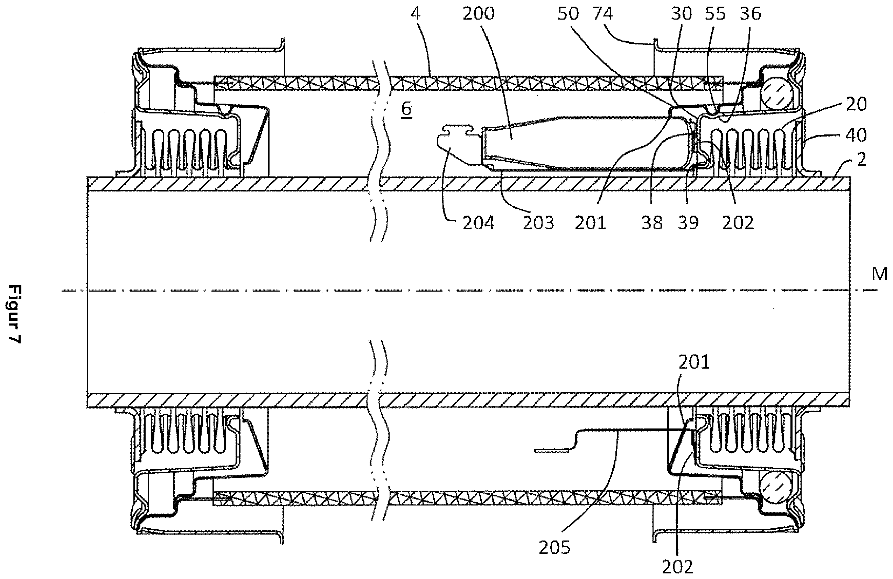

In der Figur 7 ist ein Absorberrohr 1 wie in der Figur 1, jedoch mit zusätzlichem Schutzgasbehälter 200, dargestellt. Dieser Schutzgasbehälter ist mit einem Schutz- oder Edelgas, vorzugsweise mit Xenon, gefüllt und in dem inneren Ringraum 6 zwischen dem Metallrohr 2 und Glashüllrohr 4 angeordnet. Über eine Halterung 202 ist der Schutzgasbehälter 200 mit der Ringscheibe 38 des Anschlusselements 30 verbunden. Für diese Vorrichtung ist in der Abschirmeinrichtung 50 eine Öffnung 201 vorgesehen, durch die der Schutzgasbehälter 200 in den inneren Ringraum 6 ragt. Um den Schutzgasbehälter 200 vor direkt und indirekt reflektierter Strahlung und erhöhtem Wärmeeinfluss durch das Metallrohr 2 zu schützen, ist vorzugsweise eine Abschirmeinheit 203 zwischen Metallrohr 2 und Schutzgasbehälter 200 angeordnet. Diese Abschirmeinheit 203 kann als Bestandteil der Halterung 202 ausgebildet sein. Die Abschirmeinheit 203 ist vorzugsweise ein in Richtung des Metallrohrs 2 reflektierendes Blech. Vorzugsweise ist eine Ventilvorrichtung 204 an dem Schutzgasbehälter 200 angebracht, die für einen Gasaustausch zwischen Behälter 200 und innerem Ringraum 6 eingerichtet ist. Zusätzlich zu dem Schutzgasbehälter 200 ist eine Indikatorgetter-Feder 205 dargestellt. Diese ist ebenfalls an der Halterung 202 angebracht und ragt über eine Öffnung 201 in der Abschirmeinrichtung 50 in den inneren Ringraum 6.

In der Figur 7 sind für eine bessere Übersichtlichkeit der Darstellung lediglich ein Schutzgasbehälter 200 und eine Indikatorgetter-Feder 205 eingezeichnet. Es ist auch möglich, mehrere dieser Schutzgasbehälter 200 oder Indikatorgetter-Federn 205 innerhalb des inneren Ringraums 6 anzuordnen. Diese Schutzgasbehälter 200 und Indikatorgetter-Federn 205 können auch an beiden Enden 1a und 1b vorgesehen sein. Zudem ist es möglich sowohl nur Schutzgasbehälter 200 oder nur Indikatorgetter-Federn 205 oder beide in Kombination anzuordnen.

Eine Indikatorgetter-Feder 205 ist ein Streifen aus Federblech, das als Haltelement für einen Indikator-Getter dient.

Ein Indikator-Getter lässt eine Beurteilung zu, ob vor dem ersten Betrieb des Absorberrohres das erforderliche Vakuum im Ringraum zwischen Metallrohr und Glas-Hüllrohr besteht oder im ungünstigen Fall bereits Luft in den Ringraum eingedrungen ist.

In der Regel wird das Indikator-Getter-Material, das meist im Wesentlichen aus Barium besteht in einem kleinen Ring aus Stahl untergebracht. Dieser Ring wird mittels der Indikatorgetter-Feder an der Halterung 202 im Ringraum 6 gehalten. Nachdem der Ringraum 6 evakuiert ist, wird der Ring erhitzt, so dass das Indikator-Getter-Material verdampft und sich am Glas-Hüllrohr niederschlägt. Veränderungen im Aussehen des Niederschlages geben dem Fachmann Hinweise auf die Qualität des Vakuums im Ringraum.

### Bezugszeichenliste

- 1: Absorberrohr
- 1a, 1b: Enden des Absorberrohres
- 2: Metallrohr
- 4: Glashüllrohr
- 6: innerer Ringraum
- 7, 7a, c: innerer Ringraumabschnitt
- 7b: Ringkammer
- 8: Ringraumabschnitt
- 9: Getter

- 10: Glasmetallübergangselement
- 12: Ringstufe
- 15: nach außen offener Ringraum

- 20: Dehnungsausgleichseinrichtung
- 22: inneres Ende
- 24: äußeres Ende
- 26: Verbindungsabschnitt

- 30: Anschlusselement
- 32: Ringscheibenabschnitt
- 33: radial sich nach außen erstreckender Befestigungsabschnitt
- 34: rohrförmiger Abschnitt
- 36: vierte Sicke
- 36a, b: Ausführungsformen der vierten Sicke
- 37: zweite Sicke
- 38: Ringscheibe
- 38a: Innenrand
- 39: Befestigungsabschnitt/ erste Sicke

- 40: Befestigungselement

- 50: Abschirmeinrichtung
- 51: Innenrand der Abschirmeinrichtung
- 51a: abgewinkelter Abschnitt
- 52: erster ringscheibenförmiger Abschnitt
- 53: radial außenliegende Rand
- 54: erster rohrförmiger Abschnitt
- 55: dritte Sicke
- 56: zweiter ringscheibenförmiger Abschnitt
- 57: dritter ringscheibenförmiger Abschnitt
- 58: zweiter rohrförmiger Abschnitt

- 60: Öffnung

- 70: Außenschutzkappe
- 74: Bördelung

- 100: Verbindungsbereich von Anschlusselement und Dehnungsausgleichseinrichtung
- 110: Stirnfläche

- 200: Schutzgasbehälter
- 201: Öffnung in der Abschirmeinrichtung
- 202: Halterung
- 203: Abschirmeinheit
- 204: Ventilvorrichtung
- 205: Indikatorgetter-Feder
- S: Senkrechte
- α: Neigungswinkel des ersten ringscheibenförmigen Abschnitts
- R1: Innenradius des ringförmigen Abschnitts der Abschirmeinrichtung
- R2: Innenradius der Dehnungsausgleichseinrichtung
- R3: Innenradius der Ringscheibe des Anschlusselementes
- M: Mittelachse des Metallrohrs
- Φ₁: Winkel 1 zwischen vierter Sicke 36a und vierter Sicke 36b
- Φ₂: Winkel 2 zwischen zwei vierten Sicken 36b
- B: Breite der Stirnfläche
- S1, S2, S3: Strahlungsgänge einfallenden und reflektierten Lichts

## Patentansprüche

1. Absorberrohr (1) mit einem zentralen Metallrohr (2) und
mit einem das zentrale Metallrohr (2) umgebenden Glashüllrohr (4), wobei an mindestens einem Ende (1a, b) des Glashüllrohrs (4) ein Glas-Metall-Übergangselement (10) angeordnet ist,
wobei das Metallrohr (2) und das Glas-Metall-Übergangselement (10) mittels mindestens einer Dehnungsausgleichseinrichtung (20) in Längsrichtung relativ zueinander verschiebbar und miteinander verbunden sind, wobei die Dehnungsausgleichseinrichtung (20) mindestens teilweise in einem Ringraum (6) zwischen dem Metallrohr (2) und dem Glas-Metall-Übergangselement (10) angeordnet ist,
wobei ein inneres Ende (22) der Dehnungsausgleichseinrichtung (20) an einem Anschlusselement (30) befestigt ist, das mit dem Glas-Metall-Übergangselement (10) verbunden ist, und ein äußeres Ende (24) der Dehnungsausgleichseinrichtung (20) am Metallrohr (2) befestigt ist,
wobei zwischen dem Glas-Metall-Übergangselement (10) und dem Anschlusselement (30) ein Ringraumabschnitt (7) des Ringraumes (6) ausgebildet ist, und wobei das Anschlusselement (30) und die Dehnungsausgleichseinrichtung (20) in axialer Draufsicht eine kreisringförmige Stirnfläche (110) aufweisen,
wobei das Anschlusselement (30) eine Ringscheibe (38) aufweist, an der die Dehnungsausgleichseinrichtung (20) befestigt ist,
**dadurch gekennzeichnet,**
**dass** an mindestens einem Ende (1a, b) des Absorberrohres (1) im Ringraum (6) mindestens eine Abschirmeinrichtung (50) angeordnet ist,
die einen ersten ringscheibenförmigen Abschnitt (52) aufweist, wobei der ringscheibenförmige Abschnitt (52) in axialer Richtung beabstandet vor der Stirnfläche (110) angeordnet ist.

2. Absorberrohr nach Anspruch 1, **dadurch gekennzeichnet, dass** die Ringscheibe (38) des Anschlusselements (30) einen Innenrand (38a) mit einem Innenradius R3 aufweist, an dem die Dehnungsausgleichseinrichtung (20) befestigt ist.

3. Absorberrohr nach Anspruch 2, **dadurch gekennzeichnet, dass** der erste ringscheibenförmige Abschnitt (52) der Abschirmeinrichtung (50) einen Innenradius R1 aufweist, wobei R1 größer/gleich R3 ist.

4. Absorberrohr nach einem der Ansprüche 1 bis 3, **dadurch gekennzeichnet, dass** die Ringscheibe (38) des Anschlusselements (30) eine erste Sicke (39) aufweist, an der die Dehnungsausgleichseinrichtung (20) angeordnet ist.

5. Absorberrohr nach einem der Ansprüche 1 bis 4, **dadurch gekennzeichnet, dass** der erste ringscheibenförmige Abschnitt (52) bezüglich einer Senkrechten S auf einer Mittelachse M des Absorberrohres (1) um einen Winkel α ≥ 0 geneigt angeordnet ist.

6. Absorberrohr nach Anspruch 5, **dadurch gekennzeichnet, dass** der Winkel α im Bereich von 0° - 30° liegt.

7. Absorberrohr nach einem der Ansprüche 1 bis 6, **dadurch gekennzeichnet, dass** der erste ringscheibenförmige Abschnitt (52) an seinem radial außen liegenden Rand (53) in einen ersten rohrförmigen Abschnitt (54) übergeht, der sich in den Ringraumabschnitt (7) erstreckt.

8. Absorberrohr nach einem der Ansprüche 1 bis 7, **dadurch gekennzeichnet, dass** die Abschirmeinrichtung (50) einen zweiten ringscheibenförmigen Abschnitt (56) aufweist.

9. Absorberrohr nach Anspruch 8, **dadurch gekennzeichnet, dass** der zweite ringscheibenförmige Abschnitt (56) an dem Glas-Metall-Übergangselement (10) oder an einem Ringscheibenabschnitt (32) des Anschlusselementes (30) anliegt.

10. Absorberrohr nach einem der Ansprüche 8 bis 9, **dadurch gekennzeichnet, dass** die Abschirmeinrichtung (50) einen dritten ringscheibenförmigen Abschnitt (57) aufweist.

11. Absorberrohr nach Anspruch 10, **dadurch gekennzeichnet, dass** das Glas-Metall-Übergangselement (10) eine Ringstufe (12) aufweist, an der sich der dritte ringscheibenförmige Abschnitt (57) der Abschirmeinrichtung (50) abstützt.

12. Absorberrohr nach einem der Ansprüche 8 bis 11, **dadurch gekennzeichnet, dass** der zweite ringscheibenförmige Abschnitt (56) der Abschirmeinrichtung (50) vom Ringraumabschnitt (7) eine Ringkammer (7b) abtrennt, die zwischen dem zweiten ringscheibenförmigen Abschnitt (56) und einem Ringscheibenabschnitt (32) des Anschlusselementes (30) angeordnet ist.

13. Absorberrohr nach einem der Ansprüche 7 bis 12, **dadurch gekennzeichnet, dass** der erste rohrförmige Abschnitt (54) und das Anschlusselement (30) am rohrförmigen Abschnitt (34) jeweils mindestens eine vierte Sicke (36) und eine dritte Sicke (55) aufweisen, die ineinandergreifen.

14. Absorberrohr nach einem der Ansprüche 1 bis 13, **dadurch gekennzeichnet, dass** die Abschirmeinrichtung (50) Öffnungen (60) aufweist.

15. Absorberrohr nach einem der Ansprüche 1 bis 14, **dadurch gekennzeichnet, dass** an der Außenseite des Hüllrohrs (4) eine Außenschutzkappe (70) vorgesehen ist, die mindestens das Glas-Metall-Übergangselement (10) abdeckt.

## Claims

1. Absorber tube (1) having a central metal tube (2) and
having a glass jacket tube (4) surrounding the central metal tube (2), wherein a glass/metal transition element (10) is arranged at at least one end (1a, b) of the glass jacket tube (4),
wherein the metal tube (2) and the glass/metal transition element (10) are movable relative to one another in the longitudinal direction and connected together by means of at least one expansion compensation device (20), wherein the expansion compensation device (20) is arranged at least partially in an annular space (6) between the metal tube (2) and the glass/metal transition element (10),
wherein an inner end (22) of the expansion compensation device (20) is fastened to a connection element (30) that is connected to the glass/metal transition element (10), and an outer end (24) of the expansion compensation device (20) is fastened to the metal tube (2),
wherein an annular-space portion (7) of the annular space (6) is formed between the glass/metal transition element (10) and the connection element (30), and wherein the connection element (30) and the expansion compensation device (20) have an end face (110) in the form of a circular ring in axial plan view,
wherein the connection element (30) has an annular disc (38), to which the expansion compensation device (20) is fastened,
**characterized**
**in that** at least one shielding device (50) is arranged in the annular space (6) at at least one end (1a, b) of the absorber tube (1),
said shielding device (50) having a first portion (52) in the form of an annular disc, wherein the portion (52) in the form of an annular disc is arranged in front of the end face (110) at a distance therefrom in the axial direction.

2. Absorber tube according to Claim 1, **characterized in that** the annular disc (38) of the connection element (30) has an inner edge (38a) with an inside radius R3, to which the expansion compensation device (20) is fastened.

3. Absorber tube according to Claim 2, **characterized in that** the first portion (52) in the form of an annular disc of the shielding device (50) has an inside radius R1, wherein R1 is greater than or equal to R3.

4. Absorber tube according to one of Claims 1 to 3, **characterized in that** the annular disc (38) of the connection element (30) has a first bead (39), at which the expansion compensation device (20) is arranged.

5. Absorber tube according to one of Claims 1 to 4, **characterized in that** the first portion (52) in the form of an annular disc is arranged in a manner inclined at an angle α ≥ 0 with respect to a perpendicular S to a central axis M of the absorber tube (1).

6. Absorber tube according to Claim 5, **characterized in that** the angle α is in the range of 0°-30°.

7. Absorber tube according to one of Claims 1 to 6, **characterized in that** the first portion (52) in the form of an annular disc transitions, at its radially external edge (53), into a first tubular portion (54) that extends into the annular-space portion (7).

8. Absorber tube according to one of Claims 1 to 7, **characterized in that** the shielding device (50) has a second portion (56) in the form of an annular disc.

9. Absorber tube according to Claim 8, **characterized in that** the second portion (56) in the form of an annular disc bears against the glass/metal transition element (10) or against an annular-disc portion (32) of the connection element (30).

10. Absorber tube according to either of Claims 8 and 9, **characterized in that** the shielding device (50) has a third portion (57) in the form of an annular disc.

11. Absorber tube according to Claim 10, **characterized in that** the glass/metal transition element (10) has an annular step (12), on which the third portion (57) in the form of an annular disc of the shielding device (50) is supported.

12. Absorber tube according to one of Claims 8 to 11, **characterized in that** the second portion (56) in the form of an annular disc of the shielding device (50) separates from the annular-space portion (7) an annular chamber (7b) that is arranged between the second portion (56) in the form of an annular disc and an annular-disc portion (32) of the connection element (30).

13. Absorber tube according to one of Claims 7 to 12, **characterized in that** the first tubular portion (54) and the connection element (30) on the tubular portion (34) each have at least one fourth bead (36) and third bead (55), which engage in one another.

14. Absorber tube according to one of Claims 1 to 13, **characterized in that** the shielding device (50) has openings (60).

15. Absorber tube according to one of Claims 1 to 14, **characterized in that** an external protective cap (70) is provided on the outer side of the jacket tube (4), said external protective cap (70) covering at least the glass/metal transition element (10).

## Revendications

1. Tube absorbeur (1) comprenant un tube métallique central (2) et une enveloppe tubulaire en verre (4) entourant le tube métallique central (2), un élément d'interface verre-métal (10) étant disposé à au moins une extrémité (1a, b) de l'enveloppe tubulaire en verre (4) ;
le tube métallique (2) et l'élément d'interface verre-métal (10) étant solidaires et mobiles l'un par rapport à l'autre dans la direction longitudinale au moyen d'au moins un dispositif de compensation de dilatation (20), le dispositif de compensation de dilatation (20) étant, au moins partiellement, disposé dans une chambre annulaire (6) entre le tube métallique (2) et l'élément d'interface verre-métal (10) ;
une extrémité intérieure (22) du dispositif de compensation de dilatation (20) étant fixée sur un élément de raccordement (30) solidaire de l'élément d'interface verre-métal (10) et une extrémité extérieure (24) du dispositif de compensation de dilatation (20) étant fixée sur le tube métallique (2) ;
une partie (7) de la chambre annulaire (6) étant formée entre l'élément d'interface verre-métal (10) et l'élément de raccordement (30), l'élément de raccordement (30) et le dispositif de compensation de dilatation (20) présentant, dans une vue axiale de dessus, une face avant (110) en forme de couronne annulaire ;
l'élément de raccordement (30) comportant une couronne annulaire (38) sur laquelle est fixée le dispositif de compensation de dilatation (20), **caractérisé en ce que**
au moins un dispositif de protection (50) est disposé dans la chambre annulaire (6) à au moins une extrémité (1a, b) du tube absorbeur (1),
lequel dispositif de protection présente une première partie en forme de couronne annulaire (52), la partie en forme de couronne annulaire (52) étant disposée devant la face avant (110) de manière espacée dans la direction axiale.

2. Tube absorbeur selon la revendication 1, **caractérisé en ce que** la couronne annulaire (38) de l'élément de raccordement (30) comporte un bord intérieur (38a) avec un rayon intérieur R3 auquel est fixé le dispositif de compensation de dilatation (20).

3. Tube absorbeur selon la revendication 2, **caractérisé en ce que** la première partie en forme de couronne annulaire (52) du dispositif de protection (50) présente un rayon intérieur R1, R1 étant égal ou supérieur à R3.

4. Tube absorbeur selon l'une quelconque des revendications 1 à 3, **caractérisé en ce que** la couronne (38) de l'élément de raccordement (30) comporte une première moulure (39) sur laquelle est disposé le dispositif de compensation de dilatation (20).

5. Tube absorbeur selon l'une quelconque des revendications 1 à 4, **caractérisé en ce que** la première partie en forme de couronne annulaire (52) est inclinée d'un angle α ≥ 0 par rapport à une normale S à l'axe central M du tube absorbeur (1).

6. Tube absorbeur selon la revendication 5, **caractérisé en ce que** l'angle α est compris entre 0 et 30°.

7. Tube absorbeur selon l'une quelconque des revendications 1 à 6, **caractérisé en ce qu**'au niveau de son bord radialement extérieur (53), la première partie en forme de couronne annulaire (52) se transforme en une première partie tubulaire (54) qui se prolonge dans la partie de chambre annulaire (7).

8. Tube absorbeur selon l'une quelconque des revendications 1 à 7, **caractérisé en ce que** le dispositif de protection (50) comporte une deuxième partie en forme de couronne annulaire (56).

9. Tube absorbeur selon la revendication 8, **caractérisé en ce que** la deuxième partie en forme de couronne annulaire (56) est placée contre l'élément d'interface verre-métal (10) ou contre une partie (32) de la couronne annulaire de l'élément de raccordement (30).

10. Tube absorbeur selon l'une quelconque des revendications 8 et 9, **caractérisé en ce que** le dispositif de protection (50) comporte une troisième partie en forme de couronne annulaire (57).

11. Tube absorbeur selon la revendication 10, **caractérisé en ce que** l'élément d'interface verre-métal (10) comporte un épaulement annulaire (12) sur lequel s'appuie la troisième partie en forme de couronne annulaire (57) du dispositif de protection (50).

12. Tube absorbeur selon l'une quelconque des revendications 8 à 11, **caractérisé en ce que** la deuxième partie en forme de couronne annulaire (56) du dispositif de protection (50) établit une séparation entre la partie de chambre annulaire (7) et une chambre annulaire (7b) qui est disposée entre la deuxième partie en forme de couronne annulaire (56) et une partie (32) de la couronne annulaire de l'élément de raccordement (30).

13. Tube absorbeur selon l'une quelconque des revendications 7 à 12, **caractérisé en ce que** la première partie tubulaire (54) et l'élément de raccordement (30) présentent chacun, au niveau de la partie tubulaire (34), au moins une quatrième moulure (36) et une troisième moulure (55) qui s'imbriquent l'une dans l'autre.

14. Tube absorbeur selon l'une quelconque des revendications 1 à 13, **caractérisé en ce que** le dispositif de protection (50) comporte des ouvertures (60).

15. Tube absorbeur selon l'une quelconque des revendications 1 à 14, **caractérisé en ce que**, sur le côté extérieur de l'enveloppe tubulaire (4), il est prévu un couvercle de protection extérieur (70) qui recouvre au moins l'élément d'interface verre-métal (10).
